Europäisches Patentamt

European Patent Office

Office européen des brevets

(19)

(11) Veröffentlichungsnummer : **0 081 794**
**B1**

(12) **EUROPÄISCHE PATENTSCHRIFT**

(45) Veröffentlichungstag der Patentschrift :
05.03.86

(21) Anmeldenummer : 82111303.2

(22) Anmeldetag : 07.12.82

(51) Int. Cl.⁴ : **C 04 B 35/04**, C 21 C   7/072,
C 04 B 22/00

(54) Verfahren zur Herstellung von gebrannten, feuerfesten, porösen Gasspülsteinen.

(30) Priorität : 11.12.81 AT 5321/81

(43) Veröffentlichungstag der Anmeldung :
22.06.83 Patentblatt 83/25

(45) Bekanntmachung des Hinweises auf die Patenterteilung : 05.03.86 Patentblatt 86/10

(84) Benannte Vertragsstaaten :
AT BE DE FR GB IT LU SE

(56) Entgegenhaltungen :
FR-A- 2 256 120
GB-A- 1 179 557
US-A- 3 893 867
CHEMICAL ABSTRACTS, Band 90, Nr. 16, April 1979,
Seite 288, Nr. 126234f, Columbus, Ohio, USA, K.V.
SIMONOV et al.: "Periclase porous tuyeres for blowing gases through metal"
TRANSACTIONS AND JOURNAL OF THE BRITISH
CERAMIC SOCIETY, Band 72, Nr. 4, Juni 1973, Seite
109A, Nr. 73/1803, G.B., K.V. SIMONOV et al.:
"Production of highly refractory porous plugs for
blowing steels with gases through ladle bottoms"

(73) Patentinhaber : Veitscher Magne-
sitwerke-Actien-Gesellschaft
Schubertring 10-12
A-1011 Wien (AT)

(72) Erfinder : Neuper, Helmut, Dr.
Gösserstrasse 81a
A-8707 Leoben (AT)
Erfinder : Geissler, Hermann
Gösserstrasse 81a
A-8707 Leoben (AT)

(74) Vertreter : Kliment, Peter, Dipl.-Ing. Mag.-jur. et al
Singerstrasse 8
A-1010 Wien (AT)

EP 0 081 794 B1

**Beschreibung**

Die Erfindung betrifft ein Verfahren zur Herstellung von gebrannten feuerfesten Gasspülsteinen, zum Einleiten von Gasen oder Dämpfen in Metallschmelzen, aus porösem Magnesiamaterial mit einer Gasdurchlässigkeit von mindestens 500 nPm und einer offenen Porosität von mindestens 20 Vol.-% durch Pressen einer Mischung auf Basis von Sintermagnesia, welche weitgehend frei von Feinstanteilen unter 0,5 mm ist, und einem beim Brand gasabgebenden Stoff zu Steinen und Brennen derselben.

Bei der Herstellung von Metallen, beispielsweise beim Frischen von Roheisen in Konvertern oder beim Behandeln von Stahl in Vakuumpfannen, Gießpfannen oder Zwischengefäßen von Stranggießanlagen, ist es in zunehmendem Maße gebräuchlich, aus metallurgischen Gründen Gase, wie Stickstoff oder Argon, oder Dämpfe durch die feuerfeste Auskleidung des Gefäßbodens oder der Seitenwände hindurch in die Metallschmelze einzublasen. Die zu diesem Zweck in die Auskleidung eingesetzten gasdurchlässigen feuerfesten Baukörper, die auch als Spülsteine oder Blassteine bezeichnet werden, besitzen ihre Gasdurchlässigkeit entweder dadurch, daß sie ein Korngefüge mit einem hohen Ausmaß an offenen, durchgehenden Poren aufweisen, oder dadurch, daß in ein an sich wenig oder nicht gasdurchlässiges feuerfestes Material enge Kanäle für den Gasdurchgang eingearbeitet sind. Die Erfindung betrifft Spül- oder Blassteine der erstgenannten Art, bei denen der Gasdurchgang durch die offenen Poren des Korngefüges erfolgt.

Aus der AT-B 228 696 ist ein Verfahren zur Herstellung von gebrannten feuerfesten Formkörpern hoher Porosität bekannt, die wegen ihrer guten Isolierwirkung in erster Linie als Hintermauerungssteine vorgesehen sind, bei denen aber auch an den Einsatz als Spülsteine im oben beschriebenen Sinn gedacht ist. Diese gasdurchlässigen Steine werden nach dem bekannten Verfahren aus einer Mischung aus feuerfestem Grundmaterial, das weitgehend frei von Feinstanteilen unter 0,5 mm ist, z. B. Sintermagnesia in der Körnung von 0,5 bis 2 mm, und einem beim Brand stark gasenden Zusatz, z. B. Rohmagnesit in der Körnung von 0 bis 0,5 mm und in einem Anteil von 15 bis 30 Gew.-%, hergestellt. Ferner wird der Ausgangsmischung 2 bis 7 Gew.-% aschereicher Graphit zugesetzt, dessen Verbrennungsrückstände reich an niedrigschmelzenden Silikaten sind, welche als Sinterhilfsmittel wirken und die Kaltdruckfestigkeit der gebrannten Steine erhöhen, z. B. von etwa 6 bis 13 $N/mm^2$ bei Mischungen ohne Graphit oder mit aschearmem Graphit auf etwa 25 $N/mm^2$. Derartige Magnesiaspülsteine weisen beispielsweise eine Gasdurchlässigkeit von über 600 nPm und eine offene Porosität von über 30 Vol.% auf. Durch die mit dem aschereichen Graphit eingebrachten silikatischen Schmelzphasen wird jedoch die Feuerfestigkeit der Steine herabgesetzt, so daß sie bei Verwendung in Gefäßen mit Eisen- und Stahlschmelzen einem raschen Verschleiß unterliegen.

Nach der AT-B 288 231 werden gasdurchlässige Spülsteine aus Sintermagnesia, z. B. mit 0,3 Gew.-% $Fe_2O_3$-Gehalt, mit bis zu 7 Gew.-% kaustischer Magnesia als Bindemittel und bis zu 3 Gew.-% Borsäure und/oder Eisenoxid als Sinterhilfsmittel durch Pressen, z. B. mit einem Druck von 88,3 $N/mm^2$, und Brennen, z. B. bei 1 750 °C, hergestellt, wobei eine Gasdurchlässigkeit von 1 080 nPm und eine Kaltdruckfestigkeit der Steine von 39,2 $N/mm^2$ erreicht wurde. Die Sintermagnesia soll zu über 85 Gew.-% in einer Körnung von über 0,5 mm vorliegen. Für die durchströmbaren Poren wird ein mittlerer Porendurchmesser von 0,1 bis 0,2 mm mit einem Volumanteil von 10 bis 15 % angestrebt.

Nach den bekannten Verfahren wird auf eine hohe Kaltdruckfestigkeit der Spülsteine Wert gelegt, welche durch sinterfördernde Zusätze, wie silikatische Schmelzphasen aus der Graphitasche, Borsäure oder Eisenoxid, erreicht wird. Diese den Schmelzphasenanteil erhöhenden Zusätze führen aber dazu, daß die Gasdurchlässigkeit der erhaltenen Spülsteine stark abhängig von Temperaturschwankungen beim Steinbrand ist. Solche Schwankungen der Brenntemperatur sind aber in der Praxis unvermeidlich. Daher ist es nach den bekannten Verfahren nicht möglich, eine hinsichtlich der Gasdurchlässigkeit gleichmäßige Spülsteinqualität zu erzeugen.

In der AT-B 228 696 wird zu Vergleichszwecken auch die Herstellung von Steinen nur aus Sintermagnesia und Rohmagnesit, jedoch ohne Graphitzusatz, beschrieben. Trotz dem hohen Anteil von 30 Gew.-% Rohmagnesit als gasabgebendem Stoff wird bei diesen Steinen nur eine relativ mäßige Gasdurchlässigkeit von 380 nPm erreicht.

Nach der US-A 3 893 867 werden aus feinteiligen Ausgangsmaterialien, und zwar aus Magnesia oder gebranntem Dolomit und Magnesiumhydroxid gegebenenfalls mit Calciumhydroxid, denen ein Bindemittel zugesetzt werden kann, durch Mischen, Formen zu Briketts oder größeren Formkörpern, wie Steinen, und Sinterbrennen derselben poröse feuerfeste Erzeugnisse hoher Festigkeit hergestellt, die als feuerfestes Auskleidungsmaterial oder als Katalysatorträger verwendet werden können. Die Möglichkeit des Einsatzes dieser Erzeugnisse als Spülsteine ist nicht erwähnt ; Werte für die Gasdurchlässigkeit sind nicht angegeben.

Es ist Aufgabe der Erfindung, die Nachteile der bekannten Verfahren zu vermeiden und ein Verfahren zu schaffen, das die Herstellung von Gasspülsteinen mit einer Gasdurchlässigkeit von mindestens 500 nPm, vorzugsweise im Bereich von 800 bis 1 100 nPm, in gleichmäßiger Qualität gestattet, wobei die erhaltenen Gasspülsteine eine ausreichende Kaltdruckfestigkeit und eine hohe Heißfestigkeit besitzen sollen.

Die Lösung dieser Aufgabe gelingt, ausgehend von einem Verfahren der eingangs genannten Art, erfindungsgemäß dadurch, daß eine Mischung aus 87 bis 95 Gew.-% Sintermagnesia in der Körnung von 0,5 bis 3 mm, vorzugsweise von 1 bis 2 mm, und 5 bis 13 Gew.-% Magnesiumkarbonat oder Calciumkarbonat als gasabgebendem Stoff, wobei die Sintermagnesia und der gasabgebende Stoff in eisenarmer Form mit einem Gehalt von weniger als 0,8 Gew.-% $Fe_2O_3$, glühverlustfrei gerechnet, eingesetzt werden, mit einem temporären Bindemittel, z. B. einer Magnesiumsulfatlösung, unter einem Preßdruck von 50 bis 100 $N/mm^2$, vorzugsweise bei etwa 60 $N/mm^2$, zu Steinen verpreßt wird und diese bei einer Temperatur über 1 700 °C, vorzugsweise über 1 800 °C, gebrannt werden.

Als gasabgebender Stoff eignet sich nach einer Ausgestaltung der Erfindung besonders Rohmagnesit, der in der Körnung von 0 bis 1 mm in die Ausgangsmischung eingesetzt wird.

Während nach den beiden erstgenannten bekannten Verfahren eine hohe Kaltdruckfestigkeit der Spülsteine angestrebt und durch den Einsatz von Sinterhilfsmitteln erzielt wird, werden nach dem erfindungsgemäßen Verfahren derartige sinterfördernde Flußmittelzusätze vermieden und es wird bewußt auf die Erreichung einer hohen Kaltdruckfestigkeit verzichtet. Man begnügt sich vielmehr bei den erfindungsgemäß hergestellten Spülsteinen mit einer für die Handhabung der Steine gerade noch ausreichenden Kaltdruckfestigkeit (Druckfestigkeit bei Raumtemperatur), die zwischen 5 und 15 $N/mm^2$, vorzugsweise bei etwa 10 $N/mm^2$, liegt.

Die im Unterschied zu dem in der AT-B 228 696 beschriebenen Vergleichsverfahren wesentlich höhere Gasdurchlässigkeit von mindestens 500 nPm und vorzugsweise 800 bis 1 100 nPm wird nach der Erfindung, bei einem Anteil des gasabgebenden Stoffs von nur 5 bis 13 Gew.-% in der Ausgangsmischung, vor allem dadurch erreicht, daß die Sintermagnesia und der gasabgebende Stoff in eisenarmer Form mit einem Gehalt von weniger als 0,8 Gew.-% $Fe_2O_3$ (glühverlustfrei gerechnet) eingesetzt werden, was gleichzeitig auch eine Verbesserung der Heißfestigkeit bewirkt.

Die Spülsteine nach der Erfindung lassen sich in gleichmäßiger Qualität herstellen und zeichnen sich durch gute Feuerfestigkeit, hohe Heißfestigkeit, Beständigkeit gegenüber Eisen- und Stahlschmelzen und eine geringe Neigung zur Infiltration der Schmelze aus. Ihre offene Porosität liegt über 20 Vol.-% und im allgemeinen über 25 Vol.-%, wobei eine Porenhäufung bei größeren mittleren Porenradien vorliegt, d. h. mehr als 50 % des offenen Porenraumes besitzen einen mittleren Porendurchmesser von über 0,1 mm. Die Spülsteine nach der Erfindung besitzen überraschenderweise auch eine erhöhte Haltbarkeit.

In Gießpfannen beim Spülen unter Vakuum bei gleichzeitigem Frischen mit Sauerstoff (ASV-Prozeß) eingesetzte herkömmliche Magnesitspülsteine halten im Durchschnitt 4 Chargen. Die erfindungsgemäß hergestellten Spülsteine zeigen dagegen eine deutliche Verbesserung der Lebensdauer; sie weisen eine Haltbarkeit von durchschnittlich 8 bis 9 Chargen auf.

Im folgenden werden als Beispiele zwei Ausführungsvarianten des erfindungsgemäßen Verfahrens gezeigt, jedoch ist die Erfindung nicht auf diese Beispiele beschränkt.

## Beispiel 1

Als Ausgangsmaterialien dienten Sintermagnesia aus einem türkischen Vorkommen und ebensolcher Rohmagnesit mit folgender Zusammensetzung :

|  | Sintermagnesia | | Rohmagnesit | |
|---|---|---|---|---|
| Glühverlust | – | | 50,79 | Gew.-% |
| $SiO_2$ | 0,80 | Gew.-% | 0,61 | Gew.-% |
| $Fe_2O_3$ | 0,27 | Gew.-% | 0,14 | Gew.-% |
| $Al_2O_3$ | 0,04 | Gew.-% | – | |
| CaO | 2,05 | Gew.-% | 0,95 | Gew.-% |
| MgO | 96,80 | Gew.-% | 47,51 | Gew.-% |
| $Cr_2O_3$ | 0,04 | Gew.-% | – | |

90 Gew.-% Sintermagnesia in der Körnung von 1,0 bis 2,0 mm wurden mit 10 Gew.-%. Rohmagnesit in der Körnung von 0 bis 1,0 mm und einem temporären Bindemittel (aus Kieserit hergestellte $MgSO_4$-Lösung der Dichte 1,22 $g/cm^3$) in üblicher Weise gemischt. Die Mischung wurde unter einem Druck von etwa 60 $N/mm^2$ zu Spülsteinen verpreßt und diese wurden etwa 4 Stunden bei 1 800 °C gebrannt. Die Steine wiesen folgende Eigenschaften auf :

| | | |
|---|---|---|
| Rohdichte | 2,58 | $g/cm^3$ |
| offene Porosität | 27,3 | Vol.-% |
| Druckfestigkeit bei Raumtemperatur | 10,2 | $N/mm^2$ |
| Heißdruckfestigkeit bei 1600°C | 8 bis 9 | $N/mm^2$ |
| Gasdurchlässigkeit | 1051 | nPm |

Die Spülsteine sind in der Regel kegelstumpfförmig und werden mit einer Blechummantelung mit Gasanschluß versehen. Sie können in einen dazu passenden Lochstein eingesetzt werden, der mit quadratischem oder rechteckigem Außenquerschnitt den Anschluß zur Pfannenauskleidung herstellt. In dieser Form eingesetzt in eine nach dem ASV-Prozeß betriebene Gießpfanne erbrachten die Spülsteine eine Haltbarkeit von 8 bis 9 Chargen.

### Beispiel 2

Als Ausgangsmaterial dienten eine aus Seewasser hergestellte Sintermagnesia folgender Zusammensetzung sowie der in Beispiel 1 genannte Rohmagnesit.

|  |  | Seewassermagnesia |  |
|---|---|---|---|
| Glühverlust | | 0,22 | Gew.-% |
| $SiO_2$ | | 0,79 | Gew.-% |
| $Fe_2O_3$ | | 0,20 | Gew.-% |
| $Al_2O_3$ | | 0,27 | Gew.-% |
| CaO | | 2,41 | Gew.-% |
| MgO | | 96,10 | Gew.-% |
| MnO | | 0,01 | Gew.-% |

Aus 90 Gew.-% Seewassermagnesia in der Körnung 1,0 bis 2,0 mm und 10 Gew.-% Rohmagnesit in der Körnung 0 bis 1,0 mm wurden nach dem in Beispiel 1 beschriebenen Herstellungsgang Spülsteine hergestellt, die folgende Eigenschaften aufwiesen:

| | | |
|---|---|---|
| Rohdichte | 2,47 | $g/cm^3$ |
| offene Porosität | 29,0 | Vol.-% |
| Druckfestigkeit bei Raumtemperatur | 8,5 | $N/mm^2$ |
| Heißdruckfestigkeit bei 1600°C | 7 bis 8 | $N/mm^2$ |
| Gasdurchlässigkeit | 550 | nPm |

Eingesetzt in eine für den ASV-Prozeß verwendete Gießpfanne erbrachten diese Spülsteine eine Haltbarkeit von 7 bis 9 Chargen, wobei ihre Reststärken etwas geringer waren als die der Spülsteine nach Beispiel 1.

**Patentansprüche**

1. Verfahren zur Herstellung von gebrannten feuerfesten Gasspülsteinen, zum Einleiten von Gasen oder Dämpfen in Metallschmelzen, aus porösem Magnesiamaterial mit einer Gasdurchlässigkeit von mindestens 500 nPm und einer offenen Porosität von mindestens 20 Vol.-% durch Pressen einer Mischung auf Basis von Sintermagnesia, welche weitgehend frei von Feinstanteilen unter 0,5 mm ist, und einem beim Brand gasabgebenden Stoff zu Steinen und Brennen derselben, dadurch gekennzeichnet, daß eine Mischung aus 87 bis 95 Gew.-% Sintermagnesia in der Körnung von 0,5 bis 3 mm, vorzugsweise von 1 bis 2 mm, und 5 bis 13 Gew.-% Magnesiumkarbonat oder Calciumkarbonat als gasabgebendem Stoff, wobei die Sintermagnesia und der gasabgebende Stoff in eisenarmer Form mit einem Gehalt von weniger als 0,8 Gew.-% $Fe_2O_3$, glühverlustfrei gerechnet, eingesetzt werden, mit einem temporären Bindemittel unter einem Preßdruck von 50 bis 100 $N/mm^2$, vorzugsweise bei etwa 60 $N/mm^2$, zu Steinen verpreßt wird und diese bei einer Temperatur über 1 700 °C, vorzugsweise über 1 800 °C, gebrannt werden.

2. Verfahren nach Anspruch 1, dadurch gekennzeichnet, daß als gasabgebender Stoff Rohmagnesit in der Körnung von 0 bis 1 mm eingesetzt wird.

**Claims**

1. Process for manufacturing fired refractory porous plugs for rinsing by gas for the introduction of gases or vapours into metal melts, comprised of porous magnesia material having a permeability of at least 500 nPm and an open porosity of at least 20 % by volume, by press-shaping a mixture based on sintered magnesia which is substantially free of finest grains up to 0.5 mm, characterised in that a mixture consisting of 87 to 95 % by weight of sintered magnesia having a grain size from 0.5 to 3 mm, preferably from 1 to 2 mm, and 5 to 13 % by weight of magnesium carbonate or calcium carbonate as gas delivering

4

substance, the sintered magnesia and the gas delivering substance being poor in iron having a content of less than 0.8 % by weight of $Fe_2O_3$, calculated free of ignition loss, blended with a temporary binder is shaped into plugs under a pressure of 50 to 100 N/mm², preferably about 60 N/mm², and these plugs are fired at a temperature above 1 700 °C, preferably above 1 800 °C.

2. Process according to claim 1, characterised in that crude magnesite having a grain size up to 1 mm is used as gas delivering substance.

**Revendications**

1. Procédé de fabrication de briques réfractaires cuites pour brassage au gaz, pour introduire des gaz ou des vapeurs dans des coulées de métal, à base de magnésie poreuse, avec une perméabilité aux gaz d'au moins 500 nPm et une porosité ouverte d'au moins 20 % en volume, par pressage d'un mélange à base de magnésie frittée, ladite magnésie frittée étant largement libre de particules fines de moins de 0,5 mm, et d'une matière dégageant du gaz quand elle est chauffée, pour obtenir des briques qui sont ensuite cuites, caractérisé en ce qu'un mélange de 87 à 95 % en poids de magnésie frittée dans une granulation de 0,5 à 3 mm, de préférence de 1 à 2 mm, et de 5 à 13 % en poids de carbonate de magnésium ou de carbonate de calcium comme matière dégageant du gaz, alors que la magnésie frittée et la matière dégageant du gaz sont utilisées sous une forme pauvre en fer avec une teneur de moins de 0,8 % en poids de $Fe_2O_3$, ceci étant calculé sans compter les pertes au feu, avec un liant temporaire, sous une pression de 50 à 100 N/mm², de préférence à environ 60 N/mm², est pressé pour en faire des briques et que lesdites briques sont cuites à une température de plus de 1 700 °C, de préférence de plus de 1 800 °C.

2. Procédé selon la revendication 1, caractérisé en ce que l'on utilise comme matière dégageant du gaz la magnésite brute dans une granulation de 0 à 1 mm.